(19) Europäisches Patentamt
European Patent Office
Office européen des brevets

(11) **EP 3 809 182 B1**

(12) **EUROPEAN PATENT SPECIFICATION**

(45) Date of publication and mention
of the grant of the patent:
**24.01.2024 Bulletin 2024/04**

(21) Application number: **19919223.8**

(22) Date of filing: **14.03.2019**

(51) International Patent Classification (IPC):
*G02B 13/00* (2006.01)   *G02B 9/12* (2006.01)
*G02B 13/04* (2006.01)   *G02B 13/24* (2006.01)
*G06V 40/13* (2022.01)

(52) Cooperative Patent Classification (CPC):
**G02B 9/12; G02B 13/0035; G02B 13/04;**
**G02B 13/24; G06V 40/1324;** G06V 40/1318

(86) International application number:
**PCT/CN2019/078140**

(87) International publication number:
**WO 2020/181552 (17.09.2020 Gazette 2020/38)**

(54) **LENS ASSEMBLY AND FINGERPRINT RECOGNITION MODULE**

LINSENANORDNUNG UND FINGERABDRUCKERKENNUNGSMODUL

ENSEMBLE LENTILLE ET MODULE DE RECONNAISSANCE D'EMPREINTE DIGITALE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**21.04.2021 Bulletin 2021/16**

(73) Proprietor: **SHENZHEN GOODIX TECHNOLOGY**
**CO., LTD.**
**Shenzhen, Guangdong 518045 (CN)**

(72) Inventors:
• **LI, Linxin**
**Shenzhen, Guangdong 518045 (CN)**

• **GE, Cong**
**Shenzhen, Guangdong 518045 (CN)**

(74) Representative: **Herrero & Asociados, S.L.**
**Edificio Aqua - Agustín de Foxá, 4-10**
**28036 Madrid (ES)**

(56) References cited:
**CN-A- 106 772 944    CN-A- 108 037 577**
**CN-A- 109 196 521    CN-U- 207 181 795**
**JP-A- 2006 162 829    US-A1- 2016 205 297**
**US-B1- 8 189 276**

**Description**

**TECHNICAL FIELD**

The present application relates to the field of biometric identification, and in particular, to a lens assembly and a fingerprint identification module.

**BACKGROUND**

With the development of fingerprint identification sensor, an electronic device cancels physical fingerprint position, and screen fingerprint identification has become a technological trend; and a higher screen-to-body ratio of the electronic device can improve aesthetic design and visual experience of users. Optical fingerprint identification is a method to realize fingerprint identification in a display area of a screen based on optical characteristics under a display (Under-Display). An imaging principle of the optical fingerprint identification is that an emitting unit emits light onto a finger; and since peaks and valleys of a fingerprint absorb and reflect the emitted light with different energy intensities, a receiving unit under the screen senses and identifies differences in energy, thereby generating light and dark fringes with different brightness, that is, fingerprint image information.

An existing optical fingerprint module based on a principle of collimated light is usually attached under a screen by an adhesive and has a characteristic of strong correlation with the screen. An optical collimation unit is composed of periodically distributed deep hole units, and a ratio of an aperture diameter to an aperture depth of a deep hole is referred to as an aspect ratio. Optical resolution of such an optical fingerprint module system is determined by a period and an aspect ratio of the collimation unit, and the optical fingerprint module system usually has a better resolving power for a dry finger at room temperature, but is weaker for a dry finger at low temperature.

US20160205297A1 discloses a compact optical system with a total of three lens elements (810-830) with refractive power. The first lens element 810, the second lens element 820 and the third lens element 830 are all stationary relative to one another in a paraxial region thereof. The first lens element 810 with negative refractive power has an object-side surface 811 being concave in a paraxial region thereof and an image-side surface 812 being concave in a paraxial region thereof. The first lens element 810 has the object-side surface 811 and the image-side surface 812 being both aspheric. The second lens element 820 with positive refractive power has an object-side surface 821 being convex in a paraxial region thereof and an image-side surface 822 being convex in a paraxial region thereof. The second lens element 820 the image-side surface 822 being both aspheric. The third lens element 830 with positive refractive power has an object-side surface 831 being convex in a paraxial region thereof and an image-side surface 832 being concave in a paraxial region thereof. The third lens element 830 has the object-side surface 831 and the image-side surface 832 being both aspheric.

**SUMMARY**

The scope of the invention is defined by the appended set of claims. The present invention provides a terminal device as defined in appended claim 1, which could effectively improve accuracy and identification speed of optical fingerprint identification.

Further embodiments are defined in the dependent claims.

Therefore, according to a lens assembly of an embodiment of the present application, three lenses with at least one aspherical surface are adopted and disposed in a fingerprint identification module through different optical power distribution, which can improve a resolving power of existing optical fingerprint identification, meet increasingly tight size restrictions of an electronic device and requirements of fingerprint identification for field of view, and improve accuracy and identification speed of optical fingerprint identification.

**BRIEF DESCRIPTION OF THE DRAWINGS**

FIG. 1 is a schematic diagram of an optical fingerprint module based on a principle of collimated light according to an embodiment of the present application.
FIG. 2 is a schematic diagram of a basic framework of a fingerprint identification module based on a principle of lens imaging according to an embodiment of the present application.
FIG. 3 is a schematic diagram of a lens assembly according to an embodiment of the present application.
FIG. 4 is tolerance curves of astigmatism and distortion of a lens group according to a first embodiment of embodiments of the present application.

FIG. 5 is a tolerance curve of imaging quality of a lens group according to a first embodiment of embodiments of the present application.

FIG. 6 is tolerance curves of astigmatism and distortion of a lens group according to a second embodiment of embodiments of the present application.

FIG. 7 is a tolerance curve of imaging quality of a lens group according to a second embodiment of embodiments of the present application.

FIG. 8 is tolerance curves of astigmatism and distortion of a lens group according to a third embodiment of embodiments of the present application.

FIG. 9 is a tolerance curve of imaging quality of a lens group according to a third embodiment of embodiments of the present application.

FIG. 10 is tolerance curves of astigmatism and distortion of a lens group according to a fourth embodiment of embodiments of the present application.

FIG. 11 is a tolerance curve of imaging quality of a lens group according to a fourth embodiment of embodiments of the present application.

## DESCRIPTION OF EMBODIMENTS

Embodiments that are not covered by the claims don't fall under the scope of the claimed invention. Technical solutions in embodiments of the present application will be described hereinafter with reference to the accompanying drawings.

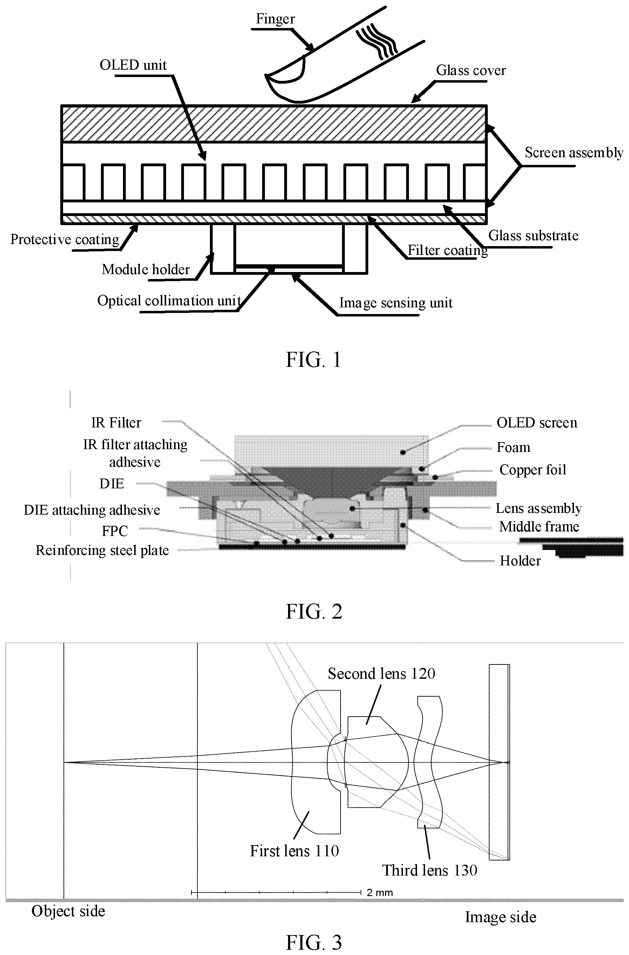

FIG. 1 shows a schematic diagram of an optical fingerprint module based on a principle of collimated light. As shown in FIG. 1, the existing optical fingerprint module based on the principle of collimated light is usually attached under a screen assembly by an adhesive and has a characteristic of strong correlation with the screen assembly. The screen assembly in FIG. 1 may include a glass cover, an organic light-emitting diode (OLED) and a glass substrate, and may also include a filter coating and a protective coating under the glass substrate. The glass cover provides a touch interface for a finger touch operation, for example, upon fingerprint identification, a finger touches a surface of the glass cover; an OLED screen unit may be configured to display an image, and may also provide a light source for fingerprint identification of the finger at the same time; and after illuminating the finger, light is reflected to generate returned light, which reaches the fingerprint identification module after passing through the screen assembly. The optical fingerprint module in FIG. 1 is located below the screen assembly and may include a module holder, an optical collimation unit, and an image sensing unit. The module holder may be configured to fix various components in the optical fingerprint module; and the optical collimation unit may be configured to receive returned light and adjust the direction of the returned light so that the image sensing unit can receive the returned light and generate fingerprint data for fingerprint identification.

The optical collimation unit is composed of periodically distributed deep hole units, and a ratio of an aperture diameter to an aperture depth of a deep hole is referred to as an aspect ratio. Optical resolution of such a system is determined by a period and an aspect ratio of the collimation unit, and the system usually has a better resolving power for a dry finger at room temperature, but is weaker for a dry finger at low temperature, for example, weaker than a fingerprint identification module system based on a principle of lens imaging. Therefore, use of a fingerprint identification module based on a principle of lens imaging can improve a resolving power of existing optical fingerprint identification.

FIG. 2 shows a basic framework of a fingerprint identification module based on a principle of lens imaging according to an embodiment of the present application. Specifically, as shown in FIG. 2, the fingerprint identification module may include an emitting unit configured to emit light, that is, a light source. For example, if the fingerprint identification module is used in a terminal device such as a mobile phone, the emitting unit may include a screen display assembly, that is, an OLED unit is usually used as a light-emitting source. Emitted light penetrates a screen glass cover, and is reflected and refracted when a user's finger touches the screen. The reflected and refracted light penetrates the screen cover and a display module, is incident on a lens assembly, and then can be imaged on a sensor surface through an infrared filter (IR Filter). The lens assembly may be interference-fitted in a holder to form an integral body, and is bonded with a chip module. The chip module may include an IR Filter, a die, a DIE attaching adhesive, a flexible printed circuit (FPC) board and a reinforcing steel plate, etc., which may be bonded into an integral body by a bonding adhesive to constitute an optical screen fingerprint identification module with the integrated lens assembly and be fixed on a middle frame of an electronic device. Foam and copper foil in the screen module of the corresponding area should be opened with a hole to allow passage of light containing a fingerprint signal.

Specifically, the lens assembly in the fingerprint identification module may include one or more lenses, or may become an optical lens assembly, which is an optical imaging element, where each lens may be spherical or aspherical, and the lens assembly is configured to focus incident light on an image sensor, and is usually made of a resin material by injection molding.

The IR filter may be an infrared radiation (IR) material coating evaporated on a blue crystal substrate, which can be configured to prevent infrared light interference from external sunlight. For example, when a user is outdoors, the IR filter can prevent strong light from causing a fingerprint to be unidentifiable.

The DIE is an integrated circuit composed of a photoelectric sensor, and can be configured to convert light energy into an electrical signal for output. It is used in combination with an optical lens to convert a light signal imaged by the optical lens into an electrical signal.

The holder may be configured to connect the lens and the DIE together and control the accuracy of defocus and eccentricity. It is usually made by metal stamping, but the embodiment of the present application is not limited thereto.

The IR filter attaching adhesive is used to attach the IR filter and the die together, and usually has a characteristic of high transmittance. For example, it may be made of an epoxy system, an acrylic system, a polyurethane system, or other polymers.

The DIE attaching adhesive may be used to fix the die and the FPC together, for example, it may usually be made of an epoxy system, an acrylic system, a polyurethane system, or other polymers.

The FPC board may be configured to connect a die circuit and an electronic device circuit.

The reinforcing plate may be configured to increase mechanical strength and reliability of the chip module. For example, it may usually be composed of a steel sheet or a printed circuit board (PCB).

In order to further improve a resolving power of existing optical fingerprint identification, an embodiment of the present application provides a lens assembly that can be used in a fingerprint identification module, and a field of view (FOV) of the lens assembly can be greater than 100°, so as to meet increasingly tight size restrictions of an electronic device and requirements of fingerprint identification for field of view, and effectively improve accuracy and identification speed of optical fingerprint identification.

Specifically, FIG. 3 shows a schematic diagram of a lens assembly 100 according to an embodiment of the present application. As shown in FIG. 3, the lens assembly 100 includes: a first lens 110, a second lens 120, and a third lens 130. The sequence of the three lenses is shown in FIG. 3, that is, the lens assembly 100 includes: the first lens 110, the second lens 120 and the third lens 130 in sequence from an object side to an image side.

It should be understood that the lens assembly 100 of the embodiment of the present application can be used in a number of scenarios, corresponding to different application scenarios, and the object side and the image side are also different. For example, the lens assembly 100 may be set in a terminal device with a fingerprint identification function. Specifically, the terminal device may include a fingerprint identification module, and the fingerprint identification module includes the lens assembly 100. Correspondingly, the object side may be a surface of a screen of the terminal device. The screen surface is used to provide a touch interface for a finger touch operation. The screen may also be configured to emit light to illuminate a finger and the light is reflected or refracted so as to generate returned light. The image side of the terminal device may refer to an image sensor in the fingerprint identification module, which may be configured to receive the returned light, and the returned light is used to generate fingerprint data for fingerprint identification, but the embodiment of the present application is not limited thereto.

Specifically, for ease of description, respective surfaces of the three lenses are named as follows: a surface of the first lens 110 close to the object side is called a first surface, and a surface of the first lens 110 close to the image side is called a second surface; a surface of the second lens 120 close to the object side is called a third surface, and a surface of the second lens 120 close to the image side is called a fourth surface; and a surface of the third lens 130 close to the object side is called a fifth surface, and a surface of the third lens 130 close to the image side is called a sixth surface.

It should be understood that the lens assembly 100 satisfies that at least one of the above six surfaces is aspherical. For example, any one or more of the six surfaces of the three lenses may be set to be aspherical; or, all six surfaces may also be set to be aspherical; or, each lens may also be set to include at least one aspherical surface, and the embodiment of the present application is not limited thereto.

It should be understood that the first lens 110 in the embodiment of the present application is a negative optical power lens, and two surfaces of the first lens 110 satisfy: both a paraxial area on the first surface and a paraxial area on the second surface are concave.

The second lens 120 in the embodiment of the present application is a positive optical power lens, and two surfaces of the second lens 120 satisfy: both a paraxial area on the third surface and a paraxial area on the fourth surface are convex.

The third lens 130 in the embodiment of the present application is a positive optical power lens, and two surfaces of the third lens 130 satisfy: a paraxial area on the fifth surface is convex, and a paraxial area on the sixth surface is concave.

It should be understood that the above paraxial area refers to an area near a central axis of each lens. As shown in FIG. 3, the paraxial area of each lens meets the above requirements, but for a non-paraxial area, for example, an edge area of each lens, it may be in any shape, such as a regular or irregular concave or convex surface. FIG. 3 is only one of possibilities, and the embodiment of the present application is not limited thereto.

It should be understood that the lens assembly 100 of the embodiment of the present application also satisfies: $0.5 < |Y'/(f * TTL)| < 0.8$, where Y' represents the maximum image height on a surface of the image side, $f$ represents a combined focal length of the three lenses in the lens assembly 100, and TTL represents a distance from the object side to the image side.

Optionally, an aperture or a diaphragm may further be arranged between the first lens 110 and the second lens 120 to adjust the amount of light passing through the lens assembly 100.

Therefore, according to a lens assembly of an embodiment of the present application, three lenses with at least one aspherical surface are adopted and disposed in a fingerprint identification module through different optical power distribution, which can improve a resolving power of existing optical fingerprint identification, meet increasingly tight size restrictions of an electronic device and requirements of fingerprint identification for field of view, and improve accuracy and identification speed of optical fingerprint identification.

A detailed description will be given below for each lens.

The first lens 110 is a negative optical power lens; a focal length thereof may be represented as $f1$, a radius of curvature of the first surface thereof is R1, and a radius of curvature of the second surface thereof is R2. The first lens 110 may be set to satisfy at least one of the following conditions: $0.6<f1/R1<1.0$, or $-1.2<f1/R2<-0.8$. Thereby, FOV imaging requirements of the lens assembly 100 can be satisfied, and a total trace length (TTL) between the object side and the image side is effectively reduced.

The second lens 120 is a positive optical power lens; a focal length thereof may be represented as $f2$, a radius of curvature of the third surface thereof is R3, and a radius of curvature of the fourth surface thereof is R4. The second lens 120 satisfies at least one of the following conditions: $0.5<f2/R3<0.7$, or $-1.6<f2/R4<-1.4$. Thereby, aberration can be reduced, and imaging quality of the lens assembly 100 can be effectively improved.

The third lens 130 is a positive optical power lens; a focal length thereof may be represented as $f3$, a radius of curvature of the fifth surface thereof is R5, and a radius of curvature of the sixth surface thereof is R6. The third lens 130 may satisfy at least one of the following conditions: $2.7<f3/R5<9.5$, or $1.0<f3/R6<8.8$. Thereby, the maximum Y' in imaging plane can be increased, and imaging quality of the lens assembly 100 is effectively improved.

It should be understood that the radius of curvature of any surface described in the embodiment of the present application refers to a radius of curvature of a paraxial area on the corresponding surface. For example, it may be an average radius of curvature of the paraxial area, or a radius of curvature of the paraxial area determined by other means, and the embodiment of the present application is not limited thereto.

In addition, the three lenses of the lens assembly 100 may be further set to satisfy other conditions in addition to the above parameters, so as to improve imaging quality. Specifically, an overall focal length of the three lenses may be represented as $f$, a combined focal length of the first lens 110 and the second lens 120 may be represented as $f12$, and a combined focal length of the second lens 120 and the third lens 130 may be represented as $f23$. Then optical power distribution between the respective lenses may satisfy at least one of the following conditions: $-1.7<f1/f2<-1.1$, $0.1<f2/f3<0.7$, $-2.1<f1/f12<-1.6$, $0.5<f2/f12<1.0$, $1.2<f2/f23<1.6$, $2.5<f3/f23<7.2$, $1.3<f12/f23<3.0$, $1.3<f12/f<3.3$, or $-2.5<f23/f<-2.0$. Thereby, a depth of field of the lens assembly 100 is reduced, and imaging quality of a specific surface (for example, an upper surface of the screen) is improved.

In addition, radiuses of curvature of six surfaces of the three lenses may also satisfy at least one of the following conditions: $-1.8<R1/R2<-0.9$, $-3.2<R3/R4<-2.1$, or $0.35<R5/R6<1$. Thereby, sensitivity of the lens assembly 100 is reduced, and product yield is improved.

A center thickness of the first lens 110 on an optical axis is CT1, a center thickness of the second lens 120 on an optical axis is CT2, and a center thickness of the third lens 130 on an optical axis is CT3. The center thicknesses of the three different lenses may satisfy at least one of the following relationships: $0.4<CT1/CT2<0.6$, or $1.8<CT2/CT3<2.2$. Thereby, a product is stronger, and a service life of the lens assembly 100 is increased.

A refractive index of a material of the first lens 110 is n1 and a dispersion coefficient of it is v1; a refractive index of the second lens 120 is n2 and a dispersion coefficient of it is v2; and a refractive index of the third lens 130 is n3 and a dispersion coefficient of it is v3. The three lenses may also satisfy at least one of the following conditions: $n1>1.50$, $n2>1.50$, $n3>1.50$, $v1>53.00$, $v2>53.0$, or $v3>53.00$. Thereby, production and preparation costs can be reduced, dispersion can be reduced, and an appropriate aberration balance can be provided.

Therefore, according to a lens assembly of an embodiment of the present application, three pieces of plastic aspherical lenses are adopted and disposed in a fingerprint identification module through different optical power distribution, which can improve a resolving power of existing optical fingerprint identification, meet increasingly tight size restrictions of an electronic device and requirements of fingerprint identification for field of view, and improve accuracy and identification speed of optical fingerprint identification. In addition, by setting the above different parameters corresponding to each lens, other parameters of the lens assembly can be further improved. For example, the lens assembly can be made to satisfy FOV>100°, so as to achieve a larger fingerprint identification area under the restriction of a narrow module size; the F number of the lens assembly can satisfy a requirement of being less than 2.0 to achieve detection of a weak fingerprint signal and shorten exposure time; and distortion TV of the lens assembly is controlled within 5% to avoid the influence of Moire fringes caused by imaging of an OLED module circuit structure.

In the embodiment of the present application, the lens assembly may be used in various scenarios. For example, the lens assembly 100 may be used in a fingerprint identification module, for example, the fingerprint identification module as shown in FIG. 2, that is, the lens assembly 100 is the lens assembly in the fingerprint identification module as shown in FIG. 2.

Optionally, the fingerprint identification module may include a lens assembly 100, and may also include a light source and an image sensor. The light source is configured to emit light. The light can illuminate a finger and is reflected back by the finger to generate returned light, which passes through the lens assembly 100 to be transmitted to the image sensor, so that the image sensor generates fingerprint data according to the returned light, and the fingerprint data is used for fingerprint identification of the finger.

Optionally, the fingerprint identification module may also specifically include various parts as shown in FIG. 2, which will not be repeated here for brevity.

In the embodiment of the present application, the fingerprint identification module including the lens assembly 100 is used in a terminal device. For example, the terminal device may be a mobile phone, so that the mobile phone has a fingerprint identification function. Specifically, the terminal device includes a display screen, and a display plane may be used to display an image, and also provide a touch interface for a finger to perform a touch operation at the same time, or may also be configured to provide a light source. For example, the display screen may be an OLED display screen as shown in FIG. 2, which is configured to generate light and illuminate a finger touching a surface of the display screen. The light is reflected by the finger to generate returned light, and the returned light is transmitted to an image sensor in the fingerprint identification module through the lens assembly 100, so that the image sensor generates fingerprint data according to the returned light, and the fingerprint data is used for fingerprint identification of the finger.

Application of the lens assembly 100 of the embodiment of the present application to a fingerprint identification module will be described in detail below in conjunction with several specific embodiments.

Optionally, as a first embodiment, a fingerprint identification module includes a screen E1, a first lens E2, a diaphragm, a second lens E3, a third lens E4, a filter E5, and a filter attaching adhesive E6 in sequence from an object side to an image side. The fingerprint identification module may be a fingerprint identification module in a terminal device, and the screen refers to a screen of the terminal device; and the three lenses in the fingerprint identification module are the three lenses included in the lens assembly as shown in FIG. 3.

Specifically, the first lens E2 is a negative optical power lens; the second lens E3 is a positive optical power lens; and the third lens E4 is a positive optical power lens. At least one of six surfaces of the three lenses in this system is aspherical. Specific parameters of the three lenses are shown in Table 1, where a focal length of the first lens E2 may be represented as $f1$, a radius of curvature of a first surface thereof is R1, and a radius of curvature of a second surface thereof is R2; a focal length of the second lens E3 may be represented as $f2$, a radius of curvature of a third surface thereof is R3, and a radius of curvature of a fourth surface thereof is R4; a focal length of the third lens E4 may be represented as $f3$, a radius of curvature of a fifth surface thereof is R5, and a radius of curvature of a sixth surface thereof is R6; an overall focal length of the three lenses may be represented as $f$, a combined focal length of the first lens E2 and the second lens E3 may be represented as $f12$, and a combined focal length of the second lens E3 and the third lens E4 may be represented as $f23$; a center thickness of the first lens E2 on an optical axis is CT1, a center thickness of the second lens E3 on an optical axis is CT2, and a center thickness of the third lens E4 on an optical axis is CT3; and Y represents the maximum image height on a surface of the image side, and TTL represents a distance from the object side to the image side.

In addition, surfaces of respective components are named in a sequence from the object side to the image side as follows: upper and lower surfaces of the screen E1 are represented as S 1 and S2, respectively, and S 1 is the object side; two surfaces of the first lens E2 are S3 and S4; a surface of the diaphragm is S5; two surfaces of the second lens E3 are S6 and S7; two surfaces of the third lens E4 are S8 and S9; two surfaces of the filter E5 are S10 and S11; two surfaces of the filter attaching adhesive E6 are S12 and S 13; and an image plane is S 14. Due to the effect of the filter attaching adhesive E6, S11 and S12 can be regarded as one plane with the same parameters, and S13 and S14 can be regarded as one plane with the same parameters. Parameters of each of the above surfaces are shown in Table 2 in detail.

**Table 1**

| Item | Parameter |
| --- | --- |
| $f1/f2$ | -1.645 |
| $f2/f3$ | 0.177 |
| $f1/f12$ | -2.072 |
| $f2/f12$ | 0.919 |
| $f2/f23$ | 1.260 |

(continued)

| Item | Parameter |
|------|-----------|
| *f*3/*f*23 | 7.121 |
| *f*12/*f*23 | 1.372 |
| *f*12/*f* | 1.377 |
| *f*23/*f* | -2.397 |
| *f*1/R1 | 0.898 |
| *f*1/R2 | -0.852 |
| *f*2/R3 | 0.502 |
| *f*2/R4 | -1.568 |
| *f*3/R5 | 9.409 |
| *f*3/R6 | 8.742 |
| Y/*f**TTL | -0.689 |
| CT1/CT2 | 0.540 |
| CT2/CT3 | 1.850 |
| R1/R2 | -0.949 |
| R3/R4 | -3.127 |
| R5/R6 | 0.929 |

**Table 2**

| Surface type | Radius of curvature | Thickness | Material | Effective diameter | Conic coefficient |
|--------------|---------------------|-----------|----------|--------------------|--------------------|
| S1 Object surface | unlimited | 1.575 | BK7 | 4.240 | 0.000 |
| S2 Spherical surface | unlimited | 1.122 | | 3.178 | 0.000 |
| S3 Aspherical surface | -1.591 | 0.409 | APL5014CL | 0.881 | -70.032 |
| S4 Aspherical surface | 1.676 | 0.213 | | 0.354 | 12.180 |
| S5 Diaphragm surface | unlimited | -0.011 | | 0.267 | 0.000 |
| S6 Aspherical surface | 1.731 | 0.757 | APL5014CL | 0.357 | -7.818 |
| S7 Aspherical surface | -0.553 | 0.064 | | 0.561 | -0.415 |
| S8 Aspherical surface | 0.521 | 0.200 | APL5014CL | 0.695 | -7.859 |
| S9 Aspherical surface | 0.561 | 0.684 | | 0.800 | -3.573 |
| S10 Spherical surface | unlimited | 0.221 | D263TECO | 1.095 | 0.000 |
| S11 & S12 Spherical surface | unlimited | 0.021 | BK7 | 1.187 | 0.000 |
| S13 & S14 Image surface | unlimited | 0.000 | | 1.197 | 0.000 |

**Table 3**

| A4 | A6 | A8 | A10 | A12 | A14 | A16 |
|-----|-----|-----|-----|-----|-----|-----|
| 0.833 | -1.090 | 2.070 | -5.650 | 13.685 | -16.744 | 8.131 |
| 6.554 | -38.725 | 838.532 | 18467.78 7 | 258164.49 8 | 1705177.70 8 | 4562658.55 5 |

(continued)

| A4 | A6 | A8 | A10 | A12 | A14 | A16 |
|---|---|---|---|---|---|---|
| 4.091 | 136.985 | 2409.63 0 | 23884.54 6 | 143340.87 8 | 499893.505 | 751782.679 |
| 4.61E+0 0 | 7.19E+0 1 | 7.21E+0 2 | 2.58E+0 3 | -1.77E+04 | 3.79E+04 | -3 .43E+04 |
| -3.22E-01 | 3.02E+0 0 | 3.66E+0 1 | 1.82E+0 2 | -2.48E+02 | 1.49E+02 | 2.06E+01 |
| -7.10E-01 | 3.82E-01 | 3.54E-01 | -9.67E-01 | 3.19E-01 | -7.94E-01 | 1.69E+00 |

In summary, in this embodiment, an overall focal length of a lens group composed of three lenses is f, and f=0.686 (mm); an aperture value (f-number) of the lens group is Fno, and Fno=1.792; the maximum field of view of the lens group is FOV, FOV=122 (degrees); relative illuminance RI at the maximum field of view is 24%, and a distance from a lower surface S2 of a screen to an image side surface S14 along an optical axis is TTL (Total Trace Length), and TTL = 1.122 + 0.409 + 0.213 - 0.011 + 0.757 + 0.064 + 0.200 + 0.684 + 0.221 + 0.021 + 0.000 = 3.68 (mm).

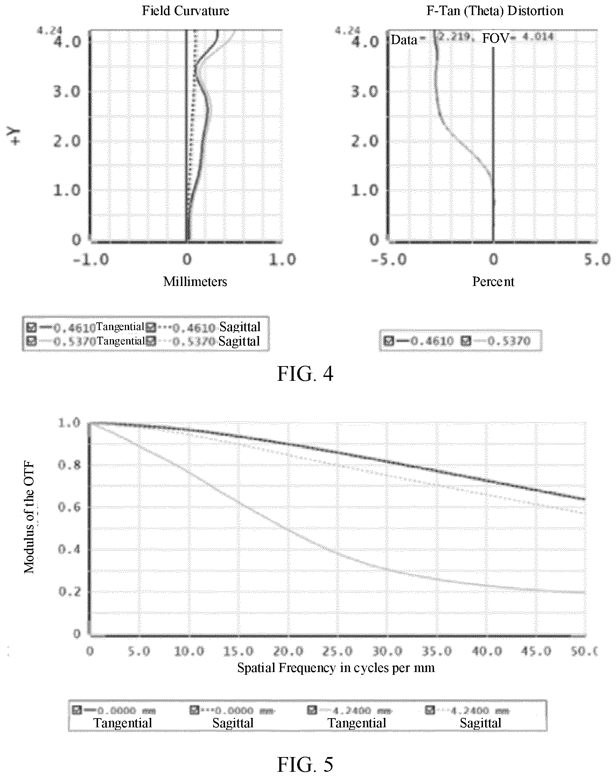

In addition, as shown in FIG. 4, from left to right are tolerance curves of astigmatism and distortion of the lens group in the first embodiment in sequence; and FIG. 5 is a tolerance curve of imaging quality of the lens group in the first embodiment, where a modulus of an optical transfer function (OTF) on a vertical coordinate may be used to represent a resolving power of an optical system.

Optionally, as a second embodiment, similar to the first embodiment, a fingerprint identification module includes a screen E1, a first lens E2, a diaphragm, a second lens E3, a third lens E4, a filter E5 and a filter attaching adhesive E6 in sequence from an object side to an image side. The three lenses are still as shown in FIG. 3.

Similarly, the first lens E2 is a negative optical power lens; the second lens E3 is a positive optical power lens; and the third lens E4 is a positive optical power lens. At least one of six surfaces of the three lenses in this system is aspherical. Specific parameters of the three lenses and parameters of each surface are shown in Table 4 to Table 6 in detail, where the meaning of each parameter in Table 4 to Table 6 is consistent with that in the first embodiment, which will not be repeated here.

**Table 4**

| Item | Parameter |
|---|---|
| f1/f2 | -1.137 |
| f2/f3 | 0.606 |
| f1/f12 | -1.760 |
| f2/f12 | 0.534 |
| f2/f23 | 1.548 |
| f3/f23 | 2.555 |
| f12/f23 | 2.900 |
| f12/f | 3.259 |
| f23/f | -2.167 |
| f1/R1 | 0.764 |
| f1/R2 | -0.972 |
| f2/R3 | 0.657 |
| f2/R4 | -1.409 |
| f3/R5 | 2.731 |
| f3/R6 | 1.081 |
| Y/f*TTL | -0.738 |
| CT1/CT2 | 0.537 |
| CT2/CT3 | 1.862 |
| R1/R2 | -1.272 |

(continued)

| Item | Parameter |
|---|---|
| R3/R4 | -2.144 |
| R5/R6 | 0.396 |

**Table 5**

| Surface type | Radius of curvature | Thickness | Material | Effective diameter | Conic coefficient |
|---|---|---|---|---|---|
| S1 Object surface | unlimited | 1.500 | BK7 | 4.240 | 0.000 |
| S2 Spherical surface | unlimited | 1.166 | | 3.227 | 0.000 |
| S3 Aspherical surface | -1.358 | 0.358 | APL5014CL | 0.864 | -58.554 |
| S4 Aspherical surface | 1.068 | 0.259 | | 0.368 | -157.488 |
| S5 Diaphragm surface | unlimited | -0.004 | | 0.256 | 0.000 |
| S6 Aspherical surface | 1.389 | 0.667 | APL5014CL | 0.287 | 19.885 |
| S7 Aspherical surface | -0.648 | 0.030 | | 0.494 | 0.446 |
| S8 Aspherical surface | 0.552 | 0.255 | APL5014CL | 0.566 | -7.885 |
| S9 Aspherical surface | 1.394 | 0.505 | | 0.651 | 0.535 |
| S10 Spherical surface | unlimited | 0.210 | D263TECO | 0.802 | 0.000 |
| S11 & S12 Spherical surface | unlimited | 0.020 | BK7 | 0.852 | 0.000 |
| S13 & S14 Image surface | unlimited | 0.000 | | 0.861 | 0.000 |

**Table 6**

| A4 | A6 | A8 | A10 | A12 | A14 | A16 |
|---|---|---|---|---|---|---|
| 0.833 | -1.090 | 2.070 | -5.650 | 13.685 | -16.744 | 8.131 |
| 6.554 | -38.725 | 838.532 | 18467.78 7 | 258164.49 8 | 1705177.70 8 | 4562658.55 5 |
| 4.091 | 136.985 | 2409.63 0 | 23884.54 6 | 143340.87 8 | 499893.505 | 751782.679 |
| 4.61E+0 0 | 7.19E+0 1 | 7.21E+0 2 | 2.58E+0 3 | -1.77E+04 | 3.79E+04 | -3 .43E+04 |
| -3.22E-01 | 3.02E+0 0 | 3.66E+0 1 | 1.82E+0 2 | -2.48E+02 | 1.49E+02 | 2.06E+01 |
| -7.10E-01 | 3.82E-01 | 3.54E-01 | -9.67E-01 | 3.19E-01 | -7.94E-01 | 1.69E+00 |

In summary, in this embodiment, an overall focal length of a lens group composed of three lenses is f, and f=0.525 (mm); an aperture value (f-number) of the lens group is Fno, and Fno=1.456; the maximum field of view of the lens group is FOV, and FOV=124 (degrees); relative illuminance RI at the maximum field of view is 27%, and a distance from a lower surface S2 of a screen to an image side surface S14 along an optical axis is TTL (Total Trace Length), and TTL = 1.166 + 0.358 + 0.259 - 0.004 + 0.667 + 0.030 + 0.255 + 0.505 + 0.210 + 0.020 + 0.000 = 3.466 (mm).

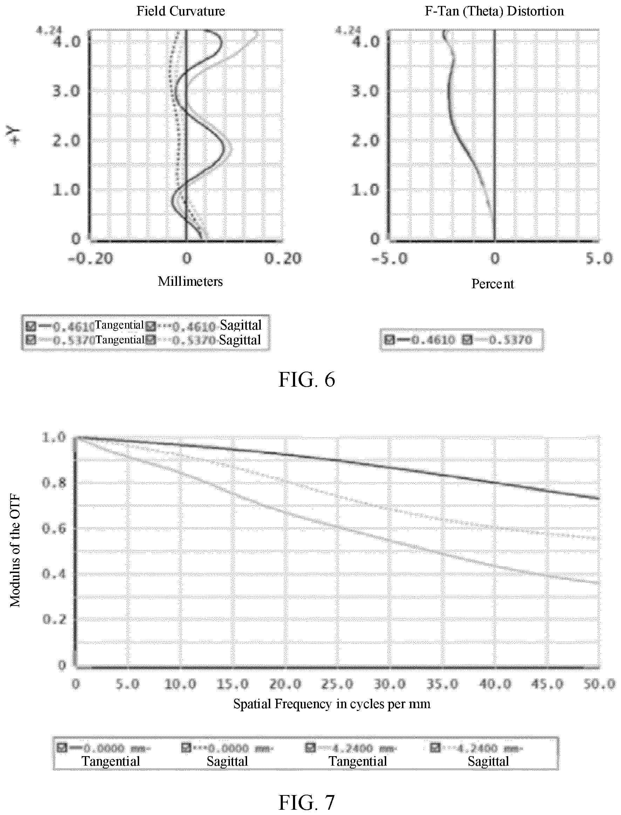

In addition, as shown in FIG. 6, from left to right are tolerance curves of astigmatism and distortion of the lens group in the second embodiment in sequence; and FIG. 7 is a tolerance curve of imaging quality of the lens group in the second embodiment, where a vertical coordinate may be used to represent a resolving power of an optical system.

Optionally, as a third embodiment, similar to the first embodiment as well, a fingerprint identification module includes a screen E1, a first lens E2, a diaphragm, a second lens E3, a third lens E4, a filter E5 and a filter attaching adhesive E6 in sequence from an object side to an image side. The three lenses are still as shown in FIG. 3.

Similarly, the first lens E2 is a negative optical power lens; the second lens E3 is a positive optical power lens; and the third lens E4 is a positive optical power lens. At least one of six surfaces of the three lenses in this system is aspherical. Specific parameters of the three lenses and parameters of each surface are shown in Table 7 to Table 9 in detail, where the meaning of each parameter in Table 7 to Table 9 is consistent with that in the first embodiment, which will not be repeated here.

**Table 7**

| Item | Parameter |
|------|-----------|
| $f1/f2$ | -1.221 |
| $f2/f3$ | 0.331 |
| $f1/f12$ | -1.635 |
| $f2/f12$ | 0.978 |
| $f2/f23$ | 1.339 |
| $f3/f23$ | 4.042 |
| $f12/f23$ | 1.369 |
| $f12/f$ | 1.616 |
| $f23/f$ | -2.436 |
| $f1/R1$ | 0.639 |
| $f1/R2$ | -1.101 |
| $f2/R3$ | 0.522 |
| $f2/R4$ | -1.564 |
| $f3/R5$ | 3.396 |
| $f3/R6$ | 1.814 |
| $Y/f^*TTL$ | -0.736 |
| CT1/CT2 | 0.474 |
| CT2/CT3 | 2.112 |
| R1/R2 | -1.723 |
| R3/R4 | -2.994 |
| R5/R6 | 0.534 |

**Table 8**

| Surface type | Radius of curvature | Thickness | Material | Effective diameter | Conic coefficient |
|--------------|--------------------|-----------|----------|--------------------|-------------------|
| S1 Object surface | unlimited | 1.500 | BK7 | 4.240 | 0.000 |
| S2 Spherical surface | unlimited | 1.071 | | 4.240 | 0.000 |
| S3 Aspherical surface | -1.514 | 0.336 | APL5014CL | 0.865 | -38.831 |
| S4 Aspherical surface | 0.879 | 0.304 | | 0.865 | 1.172 |
| S5 Diaphragm surface | unlimited | -0.002 | | 0.249 | 0.000 |
| S6 Aspherical surface | 1.517 | 0.710 | APL5014CL | 0.499 | 15.704 |
| S7 Aspherical surface | -0.507 | 0.024 | | 0.499 | -0.603 |
| S8 Aspherical surface | 0.705 | 0.270 | APL5014CL | 0.639 | -15.253 |
| S9 Aspherical surface | 1.319 | 0.520 | | 0.639 | -10.895 |
| S10 Spherical surface | unlimited | 0.210 | D263TECO | 0.848 | 0.000 |

(continued)

| Surface type | Radius of curvature | Thickness | Material | Effective diameter | Conic coefficient |
|---|---|---|---|---|---|
| S11 & S12 Spherical surface | unlimited | 0.020 | BK7 | 0.848 | 0.000 |
| S13 & S14 Image surface | unlimited | 0.000 | | 0.848 | 0.000 |

**Table 9**

| A4 | A6 | A8 | A10 | A12 | A14 | A16 |
|---|---|---|---|---|---|---|
| 1.424 | -2.749 | 4.707 | -9.169 | 21.116 | -28.021 | 14.517 |
| 4.299 | 3.391 | 1270.437 | - 33943.40 6 | 378996.29 5 | - 1911995.09 1 | 3632969.481 |
| -1.837 | - 34.67 1 | 1843.173 | - 43388.54 4 | 366064.72 1 | -469856.170 | - 4183029.53 8 |
| -4.897 | 88.86 4 | - 1042.417 | 7270.560 | -30129.934 | 68565.140 | -67610.448 |
| 0.628 | 4.471 | -58.308 | 217.844 | -424.033 | 368.242 | -191.870 |
| 1.29E -01 | 8.97E-01 | - 3.70E+0 0 | - 1.14E+01 | 1.41E+01 | 6.30E+01 | -8.92E+01 |

In summary, in this embodiment, an overall focal length of a lens group composed of three lenses is f, and f=0.501 (mm); an aperture value (f-number) of the lens group is Fno, and Fno=1.495; the maximum field of view of the lens group is FOV, and FOV=125 (degrees); relative illuminance RI at the maximum field of view is 26%, and a distance from a lower surface S2 of a screen to an image side surface S14 along an optical axis is TTL (Total Trace Length), and TTL = 1.071 + 0.336 + 0.304 - 0.002 + 0.710 + 0.024 + 0.270 + 0.520 + 0.210 + 0.020 + 0.000 = 3.463 (mm).

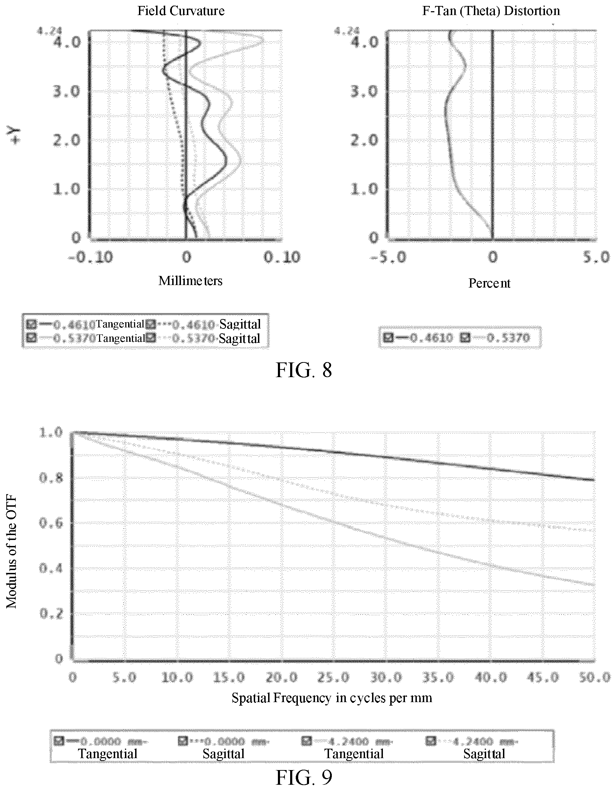

In addition, as shown in FIG. 8, from left to right are tolerance curves of astigmatism and distortion of the lens group in the third embodiment in sequence; and FIG. 9 is a tolerance curve of imaging quality of the lens group in the third embodiment, where a vertical coordinate may be used to represent a resolving power of an optical system.

Optionally, as a fourth embodiment, similar to the first embodiment, a fingerprint identification module includes a screen E1, a first lens E2, a diaphragm, a second lens E3, a third lens E4, a filter E5 and a filter attaching adhesive E6 in sequence from an object side to an image side. The three lenses are still as shown in FIG. 3.

Similarly, the first lens E2 is a negative optical power lens; the second lens E3 is a positive optical power lens; and the third lens E4 is a positive optical power lens. At least one of six surfaces of the three lenses in this system is aspherical. Specific parameters of the three lenses and parameters of each surface are shown in Table 10 to Table 12 in detail, where the meaning of each parameter in Table 10 to Table 12 is consistent with that in the first embodiment, which will not be repeated here.

**Table 10**

| Item | Parameter |
|---|---|
| f1/f2 | -1.426 |
| f2/f3 | 0.327 |
| f1/f12 | -1.931 |
| f2/f12 | 0.910 |
| f2/f23 | 1.354 |
| f3/f23 | 4.142 |
| f12/f23 | 1.488 |
| f12/f | 1.606 |
| f23/f | -2.037 |
| f1/R1 | 0.917 |

(continued)

| Item | Parameter |
|---|---|
| $f1$/R2 | -0.826 |
| $f2$/R3 | 0.638 |
| $f2$/R4 | -1.466 |
| $f3$/R5 | 4.781 |
| $f3$/R6 | 3.459 |
| Y/$f$*TTL | -0.581 |
| CT1/CT2 | 0.535 |
| CT2/CT3 | 1.871 |
| R1/R2 | -0.901 |
| R3/R4 | -2.299 |
| R5/R6 | 0.723 |

**Table 11**

| Surface type | Radius of curvature | Thickness | Material | Effective diameter | Conic coefficient |
|---|---|---|---|---|---|
| S1 Object surface | unlimited | 1.500 | BK7 | 4.240 | 0.000 |
| S2 Spherical surface | unlimited | 1.198 | | 3.272 | 0.000 |
| S3 Aspherical surface | -1.592 | 0.458 | APL5014CL | 1.010 | -47.158 |
| S4 Aspherical surface | 1.766 | 0.302 | | 0.415 | 10.185 |
| S5 Diaphragm surface | unlimited | -0.003 | | 0.298 | 0.000 |
| S6 Aspherical surface | 1.604 | 0.857 | APL5014CL | 0.400 | -18.031 |
| S7 Aspherical surface | -0.698 | 0.052 | | 0.639 | -0.379 |
| S8 Aspherical surface | 0.654 | 0.270 | APL5014CL | 0.721 | -9.840 |
| S9 Aspherical surface | 0.905 | 0.786 | | 0.835 | -2.584 |
| S10 Spherical surface | unlimited | 0.210 | D263TECO | 1.083 | 0.000 |
| S11 & S12 Spherical surface | unlimited | 0.020 | BK7 | 1.169 | 0.000 |
| S13 & S14 Image surface | unlimited | 0.000 | | 1.178 | 0.000 |

**Table 12**

| A4 | A6 | A8 | A10 | A12 | A14 | A16 |
|---|---|---|---|---|---|---|
| 0.622 | -0.616 | 0.878 | -1.982 | 3.669 | -3.357 | 1.221 |
| 4.602 | -15.936 | 373.727 | - 7231.234 | 72178.88 1 | - 334952.07 7 | 635662.03 8 |
| 2.80E+0 0 | - 7.21E+0 1 | 1.00E+0 3 | - 9.07E+0 3 | 3.95E+04 | -1.06E+05 | 1.04E+05 |
| - 3.24E+0 0 | 3.85E+0 1 | - 3.12E+0 2 | 1.57E+0 3 | - 4.65E+03 | 7.58E+03 | -5.22E+03 |
| -1.01E-01 | 1.47E+0 0 | - 1.58E+0 1 | 4.76E+0 1 | - 6.58E+01 | 3.25E+01 | -2.04E-01 |
| -5.61E-01 | -5.38E-03 | 3.89E-01 | -5.04E-01 | -2.25E-02 | -1.24E-01 | 4.24E-01 |

In summary, in this embodiment, an overall focal length of a lens group composed of three lenses is f, and f=0.6991 (mm); an aperture value (f-number) of the lens group is Fno, and Fno=1.756; the maximum field of view of the lens group is FOV, and FOV=120 (degrees); relative illuminance RI at the maximum field of view is 25%, and a distance from a lower surface S2 of a screen to an image side surface S14 along an optical axis is TTL (Total Trace Length), and TTL = 1.198 + 0.458 + 0.302 - 0.003 + 0.857 + 0.052 + 0.270 + 0.786 + 0.210 + 0.020 + 0.000 = 4.15 (mm).

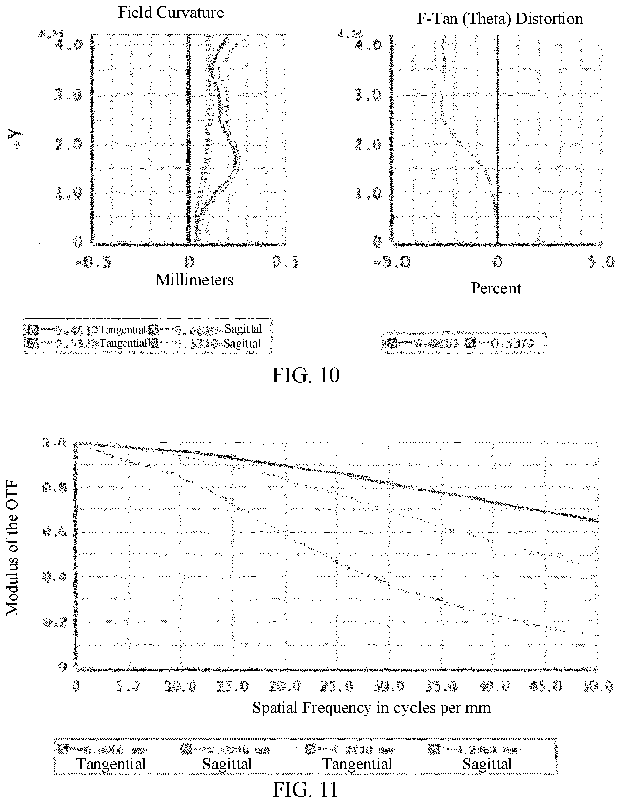

In addition, as shown in FIG. 10, from left to right are tolerance curves of astigmatism and distortion of the lens group in the fourth embodiment in sequence; and FIG. 11 is a tolerance curve of imaging quality of the lens group in the fourth embodiment, where a vertical coordinate may be used to represent a resolving power of an optical system.

Therefore, according to a lens assembly of an embodiment of the present application, three pieces of plastic aspherical lenses are adopted and disposed in a fingerprint identification module through different optical power distribution, which can improve a resolving power of existing optical fingerprint identification, meet increasingly tight size restrictions of an electronic device and requirements of fingerprint identification for field of view, and improve accuracy and identification speed of optical fingerprint identification. In addition, by setting the above different parameters corresponding to each lens, other parameters of the lens assembly can be further improved. For example, the lens assembly can be made to satisfy FOV>100°, so as to achieve a larger fingerprint identification area under the restriction of a narrow module size; the F number of the lens assembly can satisfy a requirement of being less than 2.0 to achieve detection of a weak fingerprint signal and shorten exposure time; and distortion TV of the lens assembly is controlled within 5% to avoid the influence of Moire fringes caused by imaging of an OLED module circuit structure.

The foregoing descriptions are merely specific embodiments of the present application, but the protection scope of the present application is not limited thereto, those skilled in the art who are familiar with the technical field could readily think of variations or substitutions within the technical scope disclosed by the present application, and these variations or substitutions shall fall within the protection scope as defined by the appended claims. Therefore, the protection scope of the present application shall be subject to the protection scope of the claims.

**Claims**

1. A terminal device comprising a display screen configured to provide a touch interface for a finger; and a fingerprint identification module, the fingerprint identification module is located below the display screen and configured for fingerprint identification of the finger, the fingerprint identification module comprises a lens assembly,

   the lens assembly comprises no more than three lenses, the lens assembly comprises a first lens (110), a second lens (120), and a third lens (130) in sequence from an object side to an image side, and at least one of two surfaces of the first lens (110), two surfaces of the second lens (120), and two surfaces of the third lens (130) is aspherical;
   the first lens (110) is a negative optical power lens, and both a paraxial area on a surface of the first lens close to the object side and a paraxial area on a surface of the first lens (110) close to the image side are concave;
   the second lens (120) is a positive optical power lens, and both a paraxial area on a surface of the second lens (120) close to the object side and a paraxial area on a surface of the second lens (120) close to the image side are convex; and
   the third lens (130) is a positive refractive power lens, and a paraxial area on a surface of the third lens (130) close to the object side is convex, and a paraxial area on a surface of the third lens (130) close to the image side is concave, and
   **characterized in that**
   the lens assembly satisfies: 0.5 mm$^{-1}$ <|Y'/(f*TTL)| < 0.8 mm$^{-1}$,
   where Y' represents the maximum image height on an image surface of the fingerprint identification module, $f$ represents a focal length of the lens assembly, and TTL represents a distance from a lower surface of the display screen to the image surface of the fingerprint identification module along an optical axis.

2. The terminal device according to claim 1, wherein at least one of the two surfaces of the first lens (110) is aspherical, at least one of the two surfaces of the second lens (120) is aspherical, and at least one of the two surfaces of the third lens (130) is aspherical.

3. The terminal device according to claim 1 or 2, wherein the lens assembly satisfies:

$$-1.7 < f1/f2 < -1.1, \text{ and } 0.1 < f2/f3 < 0.7$$

where $f1$ represents a focal length of the first lens (110), $f2$ represents a focal length of the second lens (120), and $f3$ is a focal length of the third lens (130).

4. The terminal device according to claim 3, wherein the lens assembly satisfies: -

$$2.1 < f1/f12 < -1.6, \text{ and } 0.5 < f2/f12 < 1,$$

where $f12$ is a combined focal length of the first lens (110) and the second lens (120).

5. The terminal device according to any one of claims 3 to 4, wherein the lens assembly satisfies: $1.2 < f2/f23 < 1.6$, and $2.5 < f3/f23 < 7.2$, where $f23$ is a combined focal length of the second lens (120) and the third lens (130).

6. The terminal device according to any one of claims 3 to 5, wherein the lens assembly satisfies: $1.3 < f12/f23 < 3.0$, where $f12$ is a combined focal length of the first lens (110) and the second lens (120), and $f23$ is a combined focal length of the second lens (120) and the third lens (130).

7. The terminal device according to claim 6, wherein the lens assembly satisfies: $1.3 < f12/f < 3.3$, and $-2.5 < f23/f < -2.0$.

8. The terminal device according to any one of claims 3 to 7, wherein the lens assembly satisfies: $0.6 < f1/R1 < 1.0$, where R1 is a radius of curvature of the paraxial area on the surface of the first lens (110) close to the object side.

9. The terminal device according to any one of claims 3 to 8, wherein the lens assembly satisfies: $-1.2 < f1/R2 < -0.8$, where R2 is a radius of curvature of the paraxial area on the surface of the first lens (110) close to the image side.

10. The terminal device according to claim 8 or 9, wherein the lens assembly satisfies:

$$0.5 < f2/R3 < 0.7,$$

where R3 is a radius of curvature of the paraxial area on the surface of the second lens (120) close to the object side.

11. The terminal device according to any one of claims 8 to 10, wherein the lens assembly satisfies: $-1.6 < f2/R4 < -1.4$, where R4 is a radius of curvature of the paraxial area on the surface of the second lens (120) close to the image side.

12. The terminal device according to claim 10 or 11, wherein the lens assembly satisfies: $2.7 < f3/R5 < 9.5$, where $f3$ is the focal length of the third lens, and R5 is a radius of curvature of the paraxial area on the surface of the third lens close to the object side.

13. The terminal device according to any one of claims 10 to 12, wherein the lens assembly satisfies: $1.0 < f3/R6 < 8.8$, where $f3$ is the focal length of the third lens, and R6 is a radius of curvature of the paraxial area on the surface of the third lens close to the image side.

14. The terminal device according to any one of claims 3 to 13, wherein the lens assembly satisfies: $0.4 < CT1/CT2 < 0.6$, and $1.8 < CT2/CT3 < 2.2$, where CT1 is a center thickness of the first lens (110), and CT2 is a center thickness of the second lens (120), and CT2 is the center thickness of the second lens (120), and CT3 is a center thickness of the third lens (130).

15. The terminal device according to any one of claims 3 to 14, wherein the lens assembly satisfies: $-1.8 < R1/R2 < -0.9$ and $-3.2 < R3/R4 < -2.1$, where R1 is a radius of curvature of the paraxial area on the surface of the first lens (110) close to the object side, R2 is a radius of curvature of the paraxial area on the surface of the first lens (110) close to the image side, R3 is a radius of curvature of the paraxial area on the surface of the second lens (120) close to the object side, and R4 is a radius of curvature of the paraxial area on the surface of the second lens (120) close to the image side.

**Patentansprüche**

1. Endgerät, das einen Anzeigebildschirm, der so konfiguriert ist, dass er eine Berührungsschnittstelle für einen Finger bereitstellt, und ein Fingerabdruck-Identifizierungsmodul umfasst,

   wobei das Fingerabdruck-Identifizierungsmodul unter dem Anzeigebildschirm angeordnet und für die Fingerabdruck-Identifizierung des Fingers konfiguriert ist, wobei das Fingerabdruck-Identifizierungsmodul eine Linsenanordnung umfasst,
   wobei die Linsenanordnung nicht mehr als drei Linsen umfasst, wobei die Linsenanordnung eine erste Linse (110), eine zweite Linse (120) und eine dritte Linse (130) in der Reihenfolge von einer Objektseite zu einer Bildseite umfasst, und mindestens eine von zwei Oberflächen der ersten Linse (110), zwei Oberflächen der zweiten Linse (120) und zwei Oberflächen der dritten Linse (130) asphärisch ist/sind;
   wobei die erste Linse (110) eine Linse mit negativer optischer Brechkraft ist, und sowohl ein paraxialer Bereich auf einer Oberfläche der ersten Linse nahe der Objektseite als auch ein paraxialer Bereich auf einer Oberfläche der ersten Linse (110) nahe der Bildseite konkav sind;
   wobei die zweite Linse (120) eine Linse mit positiver optischer Brechkraft ist, und sowohl ein paraxialer Bereich auf einer Oberfläche der zweiten Linse (120) nahe der Objektseite als auch ein paraxialer Bereich auf einer Oberfläche der zweiten Linse (120) nahe der Bildseite konvex sind; und
   wobei die dritte Linse (130) eine Linse mit positiver Brechkraft ist, und ein paraxialer Bereich auf einer Oberfläche der dritten Linse (130) nahe der Objektseite konvex ist, und ein
   paraxialer Bereich auf einer Oberfläche der dritten Linse (130) nahe der Bildseite konkav ist, und **dadurch gekennzeichnet, dass** die Linsenanordnung folgende Bedingung erfüllt:

$$0,5 \text{ mm}^{-1} < |Y'/(f * TTL)| < 0,8 \text{ mm}^{-1},$$

   wobei Y' die maximale Bildhöhe auf einer Bildfläche des Fingerabdruckidentifizierungsmoduls darstellt, f eine Brennweite der Linsenanordnung darstellt, und TTL einen Abstand von einer unteren Fläche des Anzeigebildschirms zu der Bildfläche des FingerabdruckIdentifizierungsmoduls entlang einer optischen Achse darstellt.

2. Endgerät nach Anspruch 1, wobei mindestens eine der beiden Oberflächen der ersten Linse (110) asphärisch ist, mindestens eine der beiden Oberflächen der zweiten Linse(120) asphärisch ist und mindestens eine der beiden Oberflächen der dritten Linse (130) asphärisch ist.

3. Endgerät nach Anspruch 1 oder 2, wobei die Linsenanordnung folgende Bedingungen erfüllt:

$$-1,7 < f1/f2 < -1,1, \text{ und } 0,1 < f2/f3 < 0,7$$

   wobei f1 eine Brennweite der ersten Linse (110) darstellt, f2 eine Brennweite der zweiten Linse (120) darstellt und f3 eine Brennweite der dritten Linse (130) ist.

4. Endgerät nach Anspruch 3, wobei die Linsenanordnung die folgenden Bedingungen erfüllt:

$$- 2,1 < f1/f12 < -1,6 \text{ und } 0,5 < f2/f12 < 1,$$

   wobei f12 eine kombinierte Brennweite der ersten Linse (110) und der zweiten Linse(120) ist.

5. Endgerät nach einem der Ansprüche 3 bis 4, wobei die Linsenanordnung folgende Bedingungen erfüllt:

$$1,2 < f2/f23 < 1,6 \text{ und } 2,5 < f3/f23 < 7,2,$$

   wobei f23 eine kombinierte Brennweite der zweiten Linse (120) und der dritten Linse(130) ist.

6. Endgerät nach einem der Ansprüche 3 bis 5, wobei die Linsenanordnung folgende Bedingung erfüllt:

$$1,3< f12/f23<3,0,$$

wobei f12 eine kombinierte Brennweite der ersten Linse (110) und der zweiten Linse(120) ist, und f23 eine kombinierte Brennweite der zweiten Linse (120) und der dritten Linse(130) ist.

7. Endgerät nach Anspruch 6, wobei die Linsenanordnung folgende Bedingungen erfüllt:

$$1,3< f12/f<3,3 \text{ und } -2,5<f23/f<-2,0.$$

8. Endgerät nach einem der Ansprüche 3 bis 7, wobei die Linsenanordnung die folgende Bedingung erfüllt:

$$0,6<f1/R1<1,0,$$

wobei R1 ein Krümmungsradius des paraxialen Bereichs auf der Oberfläche der ersten Linse (110) nahe der Objektseite ist.

9. Endgerät nach einem der Ansprüche 3 bis 8, wobei die Linsenanordnung folgende Bedingung erfüllt:

$$-1,2<f1/R2<-0,8,$$

wobei R2 ein Krümmungsradius des paraxialen Bereichs auf der Oberfläche der ersten Linse (110) in der Nähe der Bildseite ist.

10. Endgerät nach Anspruch 8 oder 9, wobei die Linsenanordnung folgende Bedingung erfüllt:

$$0,5<f2/R3<0,7,$$

wobei R3 ein Krümmungsradius des paraxialen Bereichs auf der Oberfläche der zweiten Linse (120) nahe der Objektseite ist.

11. Endgerät nach einem der Ansprüche 8 bis 10, wobei die Linsenanordnung die folgende Bedingung erfüllt:

$$-1,6<f2/R4<-1,4,$$

wobei R4 ein Krümmungsradius des paraxialen Bereichs auf der Oberfläche der zweiten Linse (120) in der Nähe der Bildseite ist.

12. Endgerät nach Anspruch 10 oder 11, wobei die Linsenanordnung folgende Bedingung erfüllt:

$$2,7<f3/R5<9,5,$$

wobei f3 die Brennweite der dritten Linse ist und R5 ein Krümmungsradius des paraxialen Bereichs auf der Oberfläche der dritten Linse nahe der Objektseite ist.

13. Endgerät nach einem der Ansprüche 10 bis 12, wobei die Linsenanordnung folgende Bedingung erfüllt:

$$1,0<f3/R6<8,8,$$

wobei f3 die Brennweite der dritten Linse ist und R6 ein Krümmungsradius des paraxialen Bereichs auf der Oberfläche der dritten Linse nahe der Bildseite ist.

**14.** Endgerät nach einem der Ansprüche 3 bis 13, wobei die Linsenanordnung die folgenden Bedingungen erfüllt:

$$0,4<CT1/CT2<0,6 \ und \ 1,8<CT2/CT3<2,2,$$

wobei CT1 eine Mittendicke der ersten Linse (110) ist, und CT2 eine Mittendicke der zweiten Linse (120) ist, und CT2 die Mittendicke der zweiten Linse (120) ist, und CT3 eine Mittendicke der dritten Linse (130) ist.

**15.** Endgerät nach einem der Ansprüche 3 bis 14, wobei die Linsenanordnung folgende Bedingungen erfüllt:

$$-1,8<R1/R2<-0,9 \ und \ -3,2<R3/R4<-2,1,$$

wobei R1 ein Krümmungsradius des paraxialen Bereichs auf der Oberfläche der ersten Linse (110) nahe der Objektseite ist, R2 ein Krümmungsradius des paraxialen Bereichs auf der Oberfläche der ersten Linse (110) nahe der Bildseite ist, R3 ein Krümmungsradius des paraxialen Bereichs auf der Oberfläche der zweiten Linse (120) nahe der Objektseite ist, und R4 ein Krümmungsradius des paraxialen Bereichs auf der Oberfläche der zweiten Linse (120) nahe der Bildseite ist.

**Revendications**

**1.** Dispositif terminal comprenant un écran d'affichage configuré pour fournir une interface tactile pour un doigt ; et un module d'identification d'empreintes digitales, le module d'identification d'empreintes digitales est situé au-dessous de l'écran d'affichage et configuré pour une identification d'empreintes digitales du doigt, le module d'identification d'empreintes digitales comprend un ensemble de lentilles, l'ensemble de lentilles comprend au plus trois lentilles, l'ensemble de lentilles comprend une première lentille (110), une deuxième lentille (120) et une troisième lentille (130) dans l'ordre depuis un côté d'objet jusqu'à un côté d'image, et au moins l'une de deux surfaces de la première lentille (110), de deux surfaces de la deuxième lentille (120) et de deux surfaces de la troisième lentille (130) est asphérique ;

la première lentille (110) est une lentille de puissance optique négative, et à la fois une zone paraxiale sur une surface de la première lentille proche du côté d'objet et une zone paraxiale sur une surface de la première lentille (110) proche du côté d'image sont concaves ;
la deuxième lentille (120) est une lentille de puissance optique positive, et à la fois une zone paraxiale sur une surface de la deuxième lentille (120) proche du côté d'objet et une zone paraxiale sur une surface de la deuxième lentille (120) proche du côté d'image sont convexes ; et
la troisième lentille (130) est une lentille de puissance réfractive positive, et une zone paraxiale sur une surface de la troisième lentille (130) proche du côté d'objet est convexe et une zone paraxiale sur une surface de la troisième lentille (130) proche du côté d'image est concave, et **caractérisé en ce que** l'ensemble de lentilles satisfait :

$$0,5 \ mm^{-1} \ < \ |Y'/(f*TTL)| \ < \ 0,08 \ mm^{-1},$$

où Y' représente la hauteur d'image maximale sur une surface d'image du module d'identification d'empreintes digitales, f représente une longueur focale de l'ensemble de lentilles, et TTL représente une distance depuis une surface inférieure de l'écran d'affichage jusqu'à la surface d'image du module d'identification d'empreintes digitales le long d'un axe optique.

**2.** Dispositif terminal selon la revendication 1, dans lequel au moins l'une des deux surfaces de la première lentille (110) est asphérique, au moins l'une des deux surfaces de la deuxième lentille (120) est asphérique et au moins l'une des deux surfaces de la troisième lentille (130) est asphérique.

**3.** Dispositif terminal selon la revendication 1 ou 2, dans lequel l'ensemble de lentilles satisfait :

$$-1,7 \ < \ f1/f2 \ < \ -1,1 \ et \ 0,1 \ < \ f2/f3 \ < \ 0,7,$$

où f1 représente une longueur focale de la première lentille (110), f2 représente une longueur focale de la deuxième lentille (120), et f3 représente une longueur focale de la troisième lentille (130).

4. Dispositif terminal selon la revendication 3, dans lequel l'ensemble de lentilles satisfait :

$$-2,1 < f1/f12 < -1,6 \text{ et } 0,5 < f2/f12 < 1,$$

où f12 représente une longueur focale combinée de la première lentille (110) et de la deuxième lentille (120).

5. Dispositif terminal selon la revendication 3 ou 4, dans lequel l'ensemble de lentilles satisfait :

$$1,2 < f2/f23 < 1,6 \text{ et } 2,5 < f3/f23 < 7,2,$$

où f23 représente une longueur focale combinée de la deuxième lentille (120) et de la troisième lentille (130).

6. Dispositif terminal selon l'une quelconque des revendications 3 à 5, dans lequel l'ensemble de lentilles satisfait :

$$1,3 < f12/f23 < 3,0,$$

où f12 représente une longueur focale combinée de la première lentille (110) et de la deuxième lentille (120) et f23 représente une longueur focale combinée de la deuxième lentille (120) et de la troisième lentille (130).

7. Dispositif terminal selon la revendication 6, dans lequel l'ensemble de lentilles satisfait :

$$1,3 < f12/f < 3,3 \text{ et } -2,5 < f23/f < -2,0.$$

8. Dispositif terminal selon l'une quelconque des revendications 3 à 7, dans lequel l'ensemble de lentilles satisfait :

$$0,6 < f1/R1 < 1,0,$$

où R1 représente un rayon de courbure de la zone paraxiale sur la surface de la première lentille (110) proche du côté d'objet.

9. Dispositif terminal selon l'une quelconque des revendications 3 à 8, dans lequel l'ensemble de lentilles satisfait :

$$-1,2 < f1/R2 < -0,8,$$

où R2 représente un rayon de courbure de la zone paraxiale sur la surface de la première lentille (110) proche du côté d'image.

10. Dispositif terminal selon la revendication 8 ou 9, dans lequel l'ensemble de lentilles satisfait :

$$0,5 < f2/R3 < 0,7,$$

où R3 représente un rayon de courbure de la zone paraxiale sur la surface de la deuxième lentille (120) proche du côté d'objet.

11. Dispositif terminal selon l'une quelconque des revendications 8 à 10, dans lequel l'ensemble de lentilles satisfait :

$$-1,6 < f2/R4 < -1,4,$$

où R4 représente un rayon de courbure de la zone paraxiale sur la surface de la deuxième lentille (120) proche du côté d'image.

**12.** Dispositif terminal selon la revendication 10 ou 11, dans lequel l'ensemble de lentilles satisfait :

$$2,7 < f3/R5 < 9,5,$$

où f3 représente la longueur focale de la troisième lentille et R5 représente un rayon de courbure de la zone paraxiale sur la surface de la troisième lentille proche du côté d'objet.

**13.** Dispositif terminal selon l'une quelconque des revendications 10 à 12, dans lequel l'ensemble de lentilles satisfait :

$$1,0 < f3/R6 < 8,8,$$

où f3 représente la longueur focale de la troisième lentille et R6 représente un rayon de courbure de la zone paraxiale sur la surface de la troisième lentille proche du côté d'image.

**14.** Dispositif terminal selon l'une quelconque des revendications 3 à 13, dans lequel l'ensemble de lentilles satisfait :

$$0,4 < CT1/CT2 < 0,6 \text{ et } 1,8 < CT2/CT3 < 2,2,$$

où CT1 représente une épaisseur centrale de la première lentille (110) et CT2 représente une épaisseur centrale de la deuxième lentille (120), et CT2 représente l'épaisseur centrale de la deuxième lentille (120) et CT3 représente une épaisseur centrale de la troisième lentille (130).

**15.** Dispositif terminal selon l'une quelconque des revendications 3 à 14, dans lequel l'ensemble de lentilles satisfait :

$$-1,8 < R1/R2 < -0,9 \text{ et } -3,2 < R3/R4 < -2,1,$$

où R1 représente un rayon de courbure de la zone paraxiale sur la surface de la première lentille (110) proche du côté d'objet, R2 représente un rayon de courbure de la zone paraxiale sur la surface de la première lentille (110) proche du côté d'image, R3 représente un rayon de courbure de la zone paraxiale sur la surface de la deuxième lentille (120) proche du côté d'objet et R4 représente un rayon de courbure de la zone paraxiale sur la surface de la deuxième lentille (120) proche du côté d'image.

FIG. 1

FIG. 2

FIG. 3

Field Curvature

F-Tan (Theta) Distortion

Millimeters

Percent

☑—0.4610 Tangential ☑···0.4610 Sagittal
☑···0.5370 Tangential ☑···0.5370 Sagittal

☑—0.4610 ☑···0.5370

FIG. 4

Modulus of the OTF

Spatial Frequency in cycles per mm

☑—0.0000 mm
Tangential
☑···0.0000 mm
Sagittal
☑—4.2400 mm
Tangential
☑···4.2400 mm
Sagittal

FIG. 5

Field Curvature

F-Tan (Theta) Distortion

Millimeters

Percent

☑——0.4610 Tangential ☑····0.4610 Sagittal
☑····0.5370 Tangential ☑···0.5370 Sagittal

☑——0.4610 ☑····0.5370

## FIG. 6

Modulus of the OTF

Spatial Frequency in cycles per mm

☑——0.0000 mm ☑····0.0000 mm ☑····4.2400 mm ☑····4.2400 mm
Tangential Sagittal Tangential Sagittal

## FIG. 7

Field Curvature

F-Tan (Theta) Distortion

4.24

Millimeters

Percent

☒ —0.4610 Tangential ☒ ⋯0.4610 Sagittal
☒ —0.5370 Tangential ☒ ⋯0.5370 Sagittal

☒ —0.4610 ☒ ⋯0.5370

FIG. 8

Modulus of the OTF

Spatial Frequency in cycles per mm

☒ —0.0000 mm- ☒ ⋯0.0000 mm- ☒ ⋯4.2400 mm- ☒ ⋯4.2400 mm-
Tangential         Sagittal         Tangential         Sagittal

FIG. 9

Field Curvature

F-Tan (Theta) Distortion

Millimeters

Percent

☑ —0.4610 Tangential  ☑ ···0.4610 Sagittal
☑ —0.5370 Tangential  ☑ ···0.5370 Sagittal

☑ —0.4610  ☑ —0.5370

FIG. 10

Modulus of the OTF

Spatial Frequency in cycles per mm

☑ —0.0000 mm    ☑ ···0.0000 mm    ☑ —4.2400 mm    ☑ ···4.2400 mm
Tangential       Sagittal          Tangential        Sagittal

FIG. 11

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160205297 A1